# EUROPEAN PATENT APPLICATION

(11) **EP 2 302 780 A2**
(43) Date of publication of application: **30.03.2011**
(21) Application number: 10176722.6
(22) Date of filing: 15.09.2010
(51) Int. Cl.: H02M 5/297

(54) **Frequency converter**

(30) Priority: 24.09.2009 FI 20095983; 24.09.2009 FI 20095982
(71) Applicant: ABB Oy, 00380 Helsinki (FI)
(72) Inventor: Rantanen, Jussi, 02620, Espoo (FI)
(74) Representative: Valkeiskangas, Tapio Lassi Paavali

(57) **Abstract**

A frequency converter comprising a housing (2), frequency converter means (4) installed in the housing (2), control means (6) for controlling the frequency converter means (4), and user interface means (8) for transmitting control commands from a user to the control means (6). The control means (6) of the frequency converter are provided with a load examination function during use of which the control means (6) are configured to examine whether a load is connected to an output of the frequency converter means (4), the control means (6) further being configured to raise an output frequency of the frequency converter means (4) to a desired value in response to a load connected to the frequency converter means (4) and detected by the load examination function.

## Description

### BACKGROUND OF THE INVENTION

The invention relates to a frequency converter according to the preamble of independent claim 1.

Known frequency converters are complex to use. This makes the frequency converters difficult to utilize by occasional users.

### BRIEF DESCRIPTION OF THE INVENTION

An object of the invention is to provide a frequency converter enabling the above-mentioned problem to be alleviated. The object of the invention is achieved by a frequency converter which is characterized by what is stated in the independent claim. Preferred embodiments of the invention are disclosed in the dependent claims.

The idea underlying the invention is that the control means of the frequency converter are provided with a load examination function capable of determining whether or not a load is connected to the output of the frequency converter means. When the load examination function detects a load, the frequency converter means raise the output frequency automatically to a desired value.

An advantage of the frequency converter according to the invention is that the user interface of the frequency converter may be very simple. This makes the frequency converter according to the invention easy to use.

In an embodiment of the invention, the load examination function is configured to be switched on automatically in response to connecting the frequency converter to a supplying network. This would make it unnecessary for the user interface to comprise even a start button.

The frequency converter according to the invention may employ advanced algorithms. Thus, the frequency converter according to the invention is clearly a more advanced device than the simple frequency converters comprising a couple of buttons and a potentiometer that appeared on the market some time ago.

### BRIEF DESCRIPTION OF THE FIGURES

The invention is now described in closer detail in connection with preferred embodiments and with reference to the accompanying drawings, in which
Figures 1 and 2 show a frequency converter provided with a separate user interface unit;
Figure 3 shows a frequency converter provided with a fixed user interface unit; and
Figures 4A and 4B show a separate user interface unit according to an embodiment.

### DETAILED DESCRIPTION OF THE INVENTION

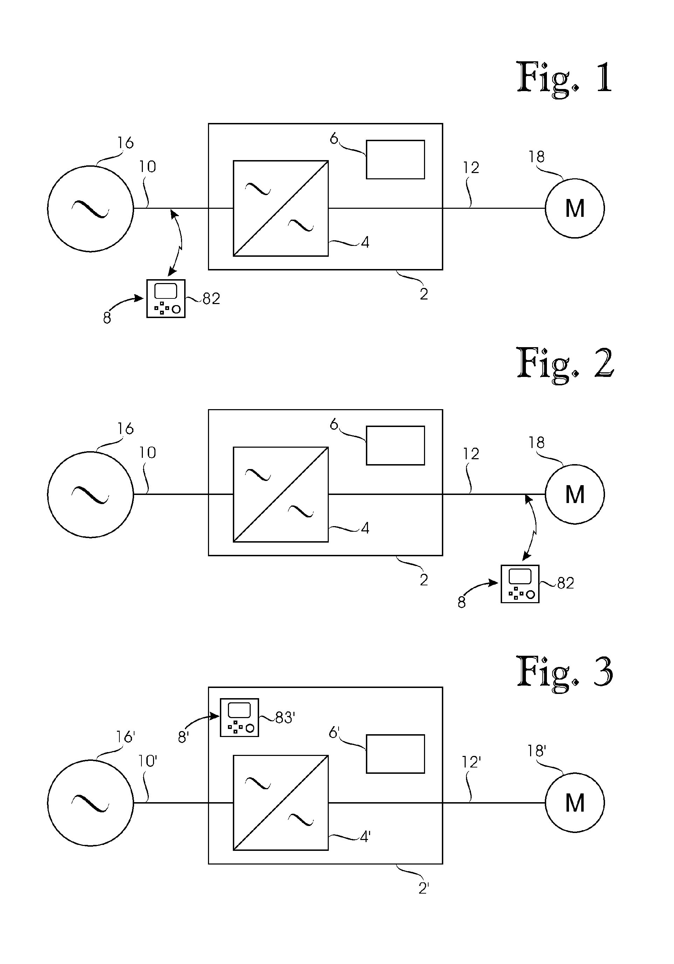

The frequency converter shown in Figure 1 comprises a housing 2, frequency converter means 4 installed in the housing 2, control means 6 for controlling the frequency converter means 4, and user interface means 8 for transmitting control commands from a user to the control means 6. The frequency converter means 4 are configured for converting the frequency of electricity. The frequency converter means 4 comprise an input connection for inputting an input-frequency electric power to the frequency converter means 4, and an output connection for outputting an output-frequency electric power from the frequency converter means 4.

The control means 6 are provided with a load examination function during use of which the control means 6 are configured to examine whether a load is connected to an output of the frequency converter means 4. The control means 6 are further configured to raise an output frequency of the frequency converter means 4 to a desired value in response to a load connected to the frequency converter means 4 and detected by the load examination function. The load may be connected to the frequency converter means by connecting a contact plug of the load to the output of the frequency converter, or by pressing a start button of the load connected to the output of the frequency converter.

In an embodiment of the invention, the load examination function is configured to be switched on automatically in response to the frequency converter being switched on. In the aforementioned embodiment, the frequency converter may also be configured to be switched on once being connected to a supplying plug contact. In an alternative embodiment, the load examination function is configured to be switched on in response to a separate start-up command given by the user via user interface means 8.

The control means 6, during the load examination function, are configured to generate voltage pulses to the output of the frequency converter means 4. Detection of a load connected to the frequency converter means 4 is based on detecting whether the voltage pulses generate an electric current at the output of the frequency converter means 4. In Figure 1, the load of the frequency converter consists of a motor 18 connected to the frequency converter means 4 via a motor cable 12.

Stored in advance therein, the control means 6 are provided with a plurality of load types and a control response list. From among the load types, one type at a time may be selected for use. For each load type, the control response list determines a response of the control means 6 to different control commands received from the user interface means 8, i.e. a manner in which the control means 6 control the frequency converter means 4 in response to each control command. The control response list has different contents for different load types, which means that the frequency converter reacts to the control commands in different ways, depending on which load type has been selected.

The load types stored in advance in the control means 6 comprise a pump, a fan, an irrigation system, a concrete mixer, a firewood splitter, and a circular saw. The control means 6 are configured to control the frequency converter means 4 in a manner which is optimal for the power supply of the selected load type. When the selected load type is a fan, for instance, the control means 6 are configured to control the frequency converter means 4 in a manner which is optimal for the power supply of the fan.

In alternative embodiments, the number of load types stored in advance in the control means may differ from that given in the above-described example. Further, stored therein, the control means may also be provided with load types other than those disclosed above. The list of stored load types may comprise one or more of the aforementioned load types, and/or one or more other load types.

For each load type, the control response list determines a response of the control means 6 to each control command, such as a switch-off command, a reversing command, and a stepping command. In embodiments wherein the frequency converter means start power supply only on the basis of a separate start-up command, for each load type, the control respond list determines a response of the control means 6 to the start-up command. Special properties of each load type have been taken into account when making the control response list.

In an embodiment, a desired frequency value to which the control means 6 are configured to raise the frequency of the frequency converter means 4 in response to a load detected by the load examination function depends exclusively on the load type selected for use. In an alternative embodiment, the user interface means 8 are configured for setting the desired frequency value to which the control means are configured to raise the frequency in response to a load detected by the load examination function. It is also possible to combine the aforementioned embodiments, in which case both the load type and the user interface means influence the desired frequency value to which the control means raise the frequency of the frequency converter means in response to a load detected by the load examination function. In a frequency converter according to the last-mentioned embodiment, the load type may for instance set a default value for a desired frequency value, but it is possible to change this default value by the user interface means. In an alternative embodiment, the load type may determine a lower limit for a desired frequency value, in which case the user interface means only enable the desired frequency value to be raised. In yet another alternative embodiment, the frequency converter means raise the output frequency to a value determined by the load type once the load has been detected, but thereafter the user interface means enable the output frequency to be raised or lowered.

The frequency converter raises the output frequency to a desired value smoothly, so it is not necessary to use slow fuses in the supplying network. Smoothness of a frequency raise may depend on the selected load type. Further, it is possible that at least in the case of certain load types, in addition to the output frequency, the control means are also configured to raise the output voltage smoothly to a desired value in response to a load connected to the frequency converter means and detected by the load examination function. The smoothness of a frequency and/or voltage raise means that a quantity in consideration increases gradually, and a final value is achieved at a certain delay. The smoothness of a frequency and/or voltage raise may depend on the selected load type.

In some embodiments, the control response list may contain separately commands for a slow and a fast start-up, a slow and a fast reversing command, slow and fast stepping, etc. In order for the user of the frequency converter to be able to utilize all functions specified in the control response list, the user interface means have to support the particular functions. If a user interface of a member of a frequency converter product line is to be kept extremely simple, the user interface may, of course, be designed to support the basic functions only, even if the control means otherwise support additional functions as well.

The user interface means 8 of the frequency converter shown in Figures 1 and 2 comprise a separate user interface unit 82, which is movable with respect to the housing 2. The separate user interface unit 82 is configured to be connected by an inductive coupling to a cable of the frequency converter in order to transmit control commands from the separate user interface unit 82 to the control means 6 via the cable. In Figure 1, the separate user interface unit 82 is coupled by an inductive coupling to a supply cable 10 of the frequency converter, the supply cable 10 being arranged to transfer electric power between a supplying electrical power network 16 and the frequency converter means 4. In Figure 2, the separate user interface unit 82 is coupled by an inductive coupling to a motor cable 12 of the frequency converter, the motor cable 12 being arranged to transfer electric power between the frequency converter means 4 and the motor 18.

Figure 3 shows a frequency converter provided with a fixed user interface unit 83'. The fixed user interface unit 83' is installed in the housing 2' of the frequency converter.

Both the separate user interface unit and the fixed user interface unit may comprise one or more operating switches for enabling the user to give control commands to the frequency converter by pressing these switches. In embodiments wherein the structure of the user interface does not have to be extremely simple and durable, the user interface unit may further comprise a display. The display may be a touch screen, in which case one or more operating switches may be implemented on the touch screen.

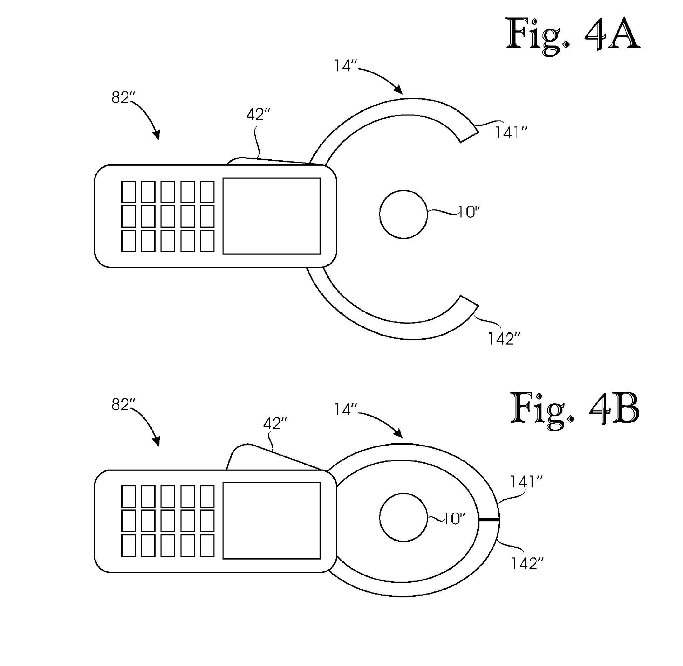

Figures 4A and 4B show a separate user interface unit 82" according to an embodiment, configured to be connected by an inductive coupling to the cable of the frequency converter and to control the frequency converter means 4 by means of control signals. The separate user interface unit 82" comprises a signal connection means 14" configured to transmit the control signals from the separate user interface means 82" to the cable of the frequency converter. The signal connection means 14" contains an openable induction loop which has an open position and a closed position, the open position being arranged for placing the openable induction loop around the cable and the closed position being arranged for feeding control signals to the cable of the frequency converter located inside the openable induction loop. In Figure 4A, the openable induction loop of the signal connection means 14" is in an open position, and in Figure 4B the openable induction loop is in a closed position.

The separate user interface unit 82" comprises an actuator 42" which enables the user to open jaws 141" and 142" of the openable induction loop by pressing the actuator 42". In Figure 4A, the jaws 141" and 142" of the openable induction loop are in an open position, where a distance between tips of the jaws 141" and 142" is substantially greater than a diameter of the supply cable 10". In Figure 4B, the jaws 141" and 142" of the openable induction loop are in their closed position, and the supply cable 10" resides inside the induction loop formed by the jaws 141" and 142", enabling control signals to be fed inductively to the supply cable 10".

The frequency converter according to the invention may be configured to be connected directly to a plug contact, in which case the contact plug is integrated in the housing of the frequency converter. Alternatively, a supply cable may be provided between the plug contact and the housing of the frequency converter. Both the supply cable and the motor cable may be either a cable fixedly connected to the housing or a detachable cable.

In an embodiment of the invention, the protection class of the frequency converter is high, at least IP66. Such a frequency converter with a high protection class may be adjusted to be used as a movable frequency converter that can be used e.g. on construction sites in dirty and wet conditions.

A load type of a frequency converter according to an embodiment of the invention is pre-selected in connection with manufacture or commissioning of the frequency converter such that the user cannot change the load type by the user interface means. The frequency converter according to this embodiment is thus configured to feed a similar load throughout its entire operating life. The load type is indicated e.g. on the housing of the frequency converter, whereby anyone using the frequency converter may easily see the type of load for the feeding of which the frequency converter is optimized. The frequency converters according to this embodiment that are intended for different load types may easily be manufactured on the same production line, since all their components are identical. After the load type has been selected, the housing of the frequency converter may be provided with a label to indicate that the frequency converter is e.g. a pump frequency converter or a fan frequency converter. In an alternative embodiment of the invention, the user interface means enable the load type to be changed.

It is obvious to a person skilled in the art that the basic idea of the invention may be implemented in many different ways. The invention and its embodiments are thus not restricted to the above examples but may vary within the scope of the claims.

## Claims

1. A frequency converter comprising a housing (2), frequency converter means (4) installed in the housing (2), control means (6) for controlling the frequency converter means (4), and user interface means (8) for transmitting control commands from a user to the control means (6), **characterized in that**
the control means (6) of the frequency converter are provided with a load examination function during use of which the control means (6) are configured to examine whether a load is connected to an output of the frequency converter means (4), the control means (6) further being configured to raise an output frequency of the frequency converter means (4) to a desired value in response to a load connected to the frequency converter means (4) and detected by the load examination function; and
the control means (6) are provided, stored in advance therein, with a plurality of load types enabling one type at a time to be selected for use from among the load types, and a control response list which, for each load type, determines a response of the control means (6) to different control commands received from the user interface means (8), i.e. a manner in which the control means (6) control the frequency converter means (4) in response to each control command, the control response list having different contents for different load types.

2. A frequency converter as claimed in claim 1, **characterized in that** the load examination function is configured to be switched on automatically in response to the frequency converter being switched on.

3. A frequency converter as claimed in claim 1 or 2, **characterized in that** the control means (6), during the load examination function, are configured to generate voltage pulses to the output of the frequency converter means (4), whereby detection of a load connected to the frequency converter means (4) is based on detecting whether the voltage pulses generate an electric current at the output of the frequency converter means (4).

4. A frequency converter as claimed in any one of the preceding claims, **characterized in that** the user interface means (8) are configured for setting a desired frequency value to which the control means are configured to raise the frequency in response to a load detected by the load examination function.

5. A frequency converter as claimed in claim 1, **characterized in that** for each load type, the control response list determines a response of the control means (6) to a load detected by the load examination function.

6. A frequency converter as claimed in claim 5, **characterized in that** for each load type, the control response list further determines a response of the control means (6) to one or more of the following: a switch-off command, a reversing command, a stepping command.

7. A frequency converter as claimed in any one of the preceding claims, **characterized in that** the load types stored in advance in the control means (6) comprise one or more of the following: a pump, a fan, an irrigation system, a concrete mixer, a firewood splitter, a circular saw.

8. A frequency converter as claimed in any one of the preceding claims, **characterized in that** a desired frequency value to which the control means (6) are configured to raise the frequency of the frequency converter means (4) in response to a load detected by the load examination function depends on the load type selected for use.

9. A frequency converter as claimed in any one of the preceding claims, **characterized in that** the load type is selected in advance in connection with manufacture or commissioning of the frequency converter such that the user cannot change the load type by the user interface means (8).

10. A frequency converter as claimed in any one of the preceding claims, **characterized in that** the user interface means comprise a separate user interface unit (82, 82") which is movable with respect to the housing (2) and which is configured to be coupled by an inductive coupling to a supply cable (10, 10") or a motor cable (12) of the frequency converter for transmitting control commands to the control means (6) via the supply cable (10, 10") or the motor cable (12).

11. A frequency converter as claimed in any one of the preceding claims, **characterized in that** a protection class of the frequency converter is at least IP66.
